# EUROPEAN PATENT APPLICATION

(11) **EP 2 757 789 A1**
(43) Date of publication of application: **23.07.2014**
(21) Application number: 12831016.6
(22) Date of filing: 03.08.2012
(51) Int. Cl.: H04N 13/02, G01B 11/02, G01C 3/06, G06T 1/00

(54) **IMAGE PROCESSING SYSTEM, IMAGE PROCESSING METHOD, AND IMAGE PROCESSING PROGRAM**

(30) Priority: 16.09.2011 JP 2011203207
(71) Applicant: Konica Minolta, Inc., Tokyo 100-7015 (JP)
(72) Inventor: ASANO, Motohiro, Hino-shi Tokyo 191-8511 (JP)
(74) Representative: HOFFMANN EITLE
(86) International application number: PCT/JP2012/069809
(87) International publication number: WO 2013/038833

(57) **Abstract**

An image processing system (1) includes first imaging means (21, 23) for capturing an image of a subject to acquire a first input image, second imaging means (22, 24) for capturing an image of the subject from a point of view different from the first imaging means to acquire a second input image, and distance information acquisition means (3) for acquiring distance information indicating a distance relative to a predetermined position, for each unit area having a predetermined pixel size, based on a correspondence for each point of the subject between the first input image and the second input image. The unit area is defined by a first pixel interval corresponding to a first direction in the first input image and a second pixel interval different from the first pixel interval, corresponding to a second direction.

## Description

### TECHNICAL FIELD

The present invention relates to an image processing system, an image processing method, and an image processing program directed to image generation for stereoscopically displaying a subject.

### BACKGROUND ART

With recent development of display devices, image processing techniques for stereoscopically displaying the same target (subject) have been developed. As a typical method that implements such stereoscopic display, binocular disparity experienced by human beings is used. When using such binocular disparity, it is necessary to generate a pair of images (hereinafter also referred to as "stereo image" or "3D image") with disparity in accordance with the distance from imaging means to a subject.

For example, in the technique disclosed in Japanese Laid-Open Patent Publication No. 2008-216127 (Patent Document 1), a plurality of image information is acquired by capturing images of a subject from different locations with a plurality of imaging means, and a degree of correlation between these image information is calculated by performing correlation operations such as the SAD (Sum of Absolute Difference) method and the SSD (Sum of Squared Difference) method. A distance image is then generated by calculating a disparity value for the subject based on the calculated degree of correlation and calculating the position of the subject (distance value) from the disparity value. Japanese Laid-Open Patent Publication No. 2008-216127 further discloses a configuration for generating a reliable distance image by obtaining accurate operation results in sub-pixel level operations while reducing the processing time.

### CITATION LIST

### PATENT DOCUMENT

PTD 1: Japanese Laid-Open Patent Publication No. 2008-216127

### SUMMARY OF INVENTION

### TECHNICAL PROBLEM

When a stereo image is generated by the aforementioned method, a distortion may be produced in the image. With such a distortion, for example, if an artifact having a linear structure is included in a subject, the produced distortion is conspicuous since the user knows the shape of the artifact. Such a distortion may occur when a corresponding point between two images cannot be found accurately in calculating a disparity value for a subject or when a region in which the distances from imaging means greatly vary is included in a subject.

In order to avoid such a distortion in an image, the distance image indicating disparity may be smoothed to such an extent that does not cause a distortion in an image. However, such a method impairs crispness of the image.

The present invention is therefore made to solve such a problem. An object of the present invention is to provide an image processing system, an image processing method, and an image processing program suitable for stereoscopic display with crispness with a distortion in an image being suppressed.

### SOLUTION TO PROBLEM

According to an aspect of the present invention, an image processing system includes first imaging means for capturing an image of a subject to acquire a first input image, second imaging means for capturing an image of the subject from a point of view different from the first imaging means to acquire a second input image, and distance information acquisition means for acquiring distance information indicating a distance relative to a predetermined position, for each of unit areas having a predetermined pixel size, between the first input image and the second input image. The unit areas are defined by a first pixel interval corresponding to a first direction in the first input image and a second pixel interval different from the first pixel interval, corresponding to a second direction.

Preferably, the image processing system further includes stereoscopic view generation means for generating a stereo image for stereoscopically displaying the subject by shifting pixels included in the first input image in the first direction, based on the distance information. The first pixel interval that defines the unit areas is set shorter than the second pixel interval.

Further preferably, the image processing system further includes smoothing processing means for performing a smoothing process in accordance with a directivity of a pixel size of the unit area, on a distance image indicating the distance information.

Preferably, the image processing system further includes area determination means for determining a feature area included in the subject. The distance information acquisition means changes a pixel size for a unit area that includes the extracted feature area.

Further preferably, the feature area includes any of a straight line, a quadric curve, a circle, an ellipse, and a texture.

Further preferably, the feature area includes a near and far conflict area that is an area in which variations in distance are relatively great.

Preferably, the distance information acquisition means acquires the distance information based on a correspondence for each point of the subject between the first input image and the second input image.

According to another aspect of the present invention, an image processing method includes the steps of: capturing an image of a subject to acquire a first input image; capturing an image of the subject from a point of view different from a point of view from which the first input image is captured, to acquire a second input image; and acquiring distance information indicating a distance relative to a predetermined position, for each of unit areas having a predetermined pixel size, between the first input image and the second input image. The unit areas are defined by a first pixel interval corresponding to a first direction in the first input image and a second pixel interval different from the first pixel interval, corresponding to a second direction.

According to a further aspect of the present invention, an image processing program allows a computer to execute image processing. The image processing program causes the computer to perform the steps of: capturing an image of a subject to acquire a first input image; capturing an image of the subject from a point of view different from a point of view from which the first input image is captured, to acquire a second input image; and acquiring distance information indicating a distance relative to a predetermined position, for each of unit areas having a predetermined pixel size, between the first input image and the second input image. The unit areas are defined by a first pixel interval corresponding to a first direction in the first input image and a second pixel interval different from the first pixel interval, corresponding to a second direction.

### ADVANTAGEOUS EFFECTS OF INVENTION

The present invention provides stereoscopic display with crispness with a distortion in an image being suppressed.

### BRIEF DESCRIPTION OF DRAWINGS

Fig. 1 is a block diagram showing a basic configuration of an image processing system according to an embodiment of the present invention.
Fig. 2 is a diagram showing a specific configuration example of an imaging unit shown in Fig. 1.
Fig. 3 is a block diagram showing a configuration of a digital camera that implements the image processing system shown in Fig. 1.
Fig. 4 is a block diagram showing a configuration of a personal computer that implements the image processing system shown in Fig. 1.
Fig. 5 is a block diagram schematically showing a procedure of an image processing method related to the present invention.
Fig. 6 is a diagram showing an example of a pair of input images captured by the imaging unit shown in Fig. 1.
Fig. 7 is a diagram showing an example of a distance image generated from a pair of input images shown in Fig. 6 in accordance with the image processing method related to the present invention.
Fig. 8 is a diagram showing an example of an averaging filter used in a smoothing process (step S2) in Fig. 5.
Fig. 9 is a diagram showing a result of the smoothing process performed on the distance image shown in Fig. 7.
Fig. 10 is a diagram for explaining the process procedure in a stereo image generation process (step S3) in Fig. 5.
Fig. 11 is a flowchart showing the process procedure of the stereo image generation process shown in Fig. 10.
Fig. 12 is a diagram showing an example of a stereo image generated through the image processing method related to the present invention.
Fig. 13 is a block diagram schematically showing a procedure of the image processing method according to a first embodiment of the present invention.
Fig. 14 is a diagram showing an example of a distance image generated from a pair of input images shown in Fig. 6 in accordance with the image processing method according to the first embodiment of the present invention.
Fig. 15 is a diagram showing a result of the smoothing process performed on the distance image shown in Fig. 14.
Fig. 16 is a diagram showing an example of a stereo image generated through the image processing method according to the first embodiment of the present invention.
Fig. 17 is a block diagram schematically showing a procedure of the image processing method according to a second embodiment of the present invention.
Fig. 18 is a flowchart showing a process procedure of an artifact extraction process shown in Fig. 17.
Fig. 19 is a diagram showing an example of a result of the artifact extraction process in the image processing method according to the second embodiment of the present invention.
Fig. 20 is a block diagram schematically showing a procedure of the image processing method according to a third embodiment of the present invention.
Fig. 21 is a flowchart showing a process procedure of a near and far conflict area extraction process shown in Fig. 20.
Fig. 22 is a diagram showing an example of a block set in the process procedure of the near and far conflict area extraction process shown in Fig. 21.
Fig. 23 is a diagram showing an example of a histogram of distances of pixels included in a block shown in Fig. 22.
Fig. 24 is a diagram showing an example of a result of the near and far conflict area extraction process in the image processing method according to the third embodiment of the present invention.
Fig. 25 is a diagram for explaining the process contents in a corresponding point search process and a distance image generation process and an additional distance image generation process shown in Fig. 20.
Fig. 26 is a block diagram schematically showing a procedure of the image processing method according to a first modification of the embodiment of the present invention.
Fig. 27 is a diagram showing an example of an averaging filter used in the smoothing process shown in Fig. 26.
Fig. 28 is a diagram for explaining the smoothing process according to a second modification of the embodiment of the present invention.

### DESCRIPTION OF EMBODIMENTS

Embodiments of the present invention will be described in details with reference to the figures. It is noted that the same or corresponding parts in the figures are denoted with the same reference signs, and a description thereof is not repeated.

### <A. Overview>

An image processing system according to an embodiment of the present invention generates a stereo image for performing stereoscopic display from a plurality of input images obtained by capturing a subject from a plurality of points of view. In generation of the stereo image, distance information between two input images is obtained for each of unit areas having a predetermined pixel size. A stereo image is generated from the obtained distance information for each point.

In the image processing system according to the present embodiment, a unit area having a different pixel size between a vertical direction and a horizontal direction is used to relax the precision in a predetermined direction when searching for a correspondence and acquiring distance information.

Accordingly, crispy stereoscopic display can be realized while suppressing an image distortion

### <B. System Configuration>

First, a configuration of the image processing system according to the present embodiment will be described.

### (b1. Basic Configuration)

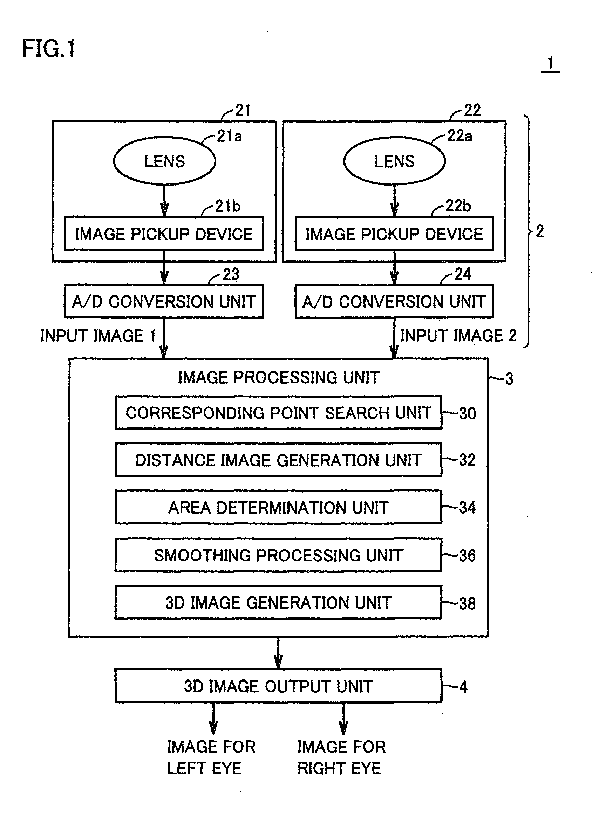

Fig. 1 is a block diagram showing a basic configuration of an image processing system 1 according to an embodiment of the present invention. Referring to Fig. 1, image processing system 1 includes an imaging unit 2, an image processing unit 3, and a 3D image output unit 4. In image processing system 1 shown in Fig. 1, imaging unit 2 captures an image of a subject to acquire a pair of input images (input image 1 and input image 2), and image processing unit 3 performs image processing as described later on the acquired pair of input images, whereby a stereo image (an image for the right eye and an image for the left eye) for stereoscopically displaying the subject is generated. 3D image output unit 4 outputs the stereo image (the image for the right eye and the image for the left eye) to a display device or the like.

Imaging unit 2 generates a pair of input images by capturing images of the same target (subject) from different points of view. More specifically, imaging unit 2 includes a first camera 21, a second camera 22, an A/D (Analog to Digital) conversion unit 23 connected to the first camera, and an A/D conversion unit 24 connected to second camera 22. A/D conversion unit 23 outputs an input image 1 indicating the subject captured by first camera 21, and A/D conversion unit 24 outputs an input image 2 indicating the subject captured by second camera 22.

That is, first camera 21 and A/D conversion unit 23 correspond to first imaging means for capturing an image of a subject to acquire a first input image, and second camera 22 and A/D conversion unit 24 correspond to second imaging means for capturing an image of the subject from a point of view different from the first imaging means to acquire a second input image.

First camera 21 includes a lens 21a that is an optical system for capturing an image of a subject, and an image pickup device 21b that is a device converting light collected by lens 21a into an electrical signal. A/D conversion unit 23 converts a video signal (analog electrical signal) indicating a subject that is output from image pickup device 21b, into a digital signal for output. Similarly, camera 22 includes a lens 22a that is an optical system for capturing an image of a subject, and an image pickup device 22b that is a device converting light collected by lens 22a into an electrical signal. A/D conversion unit 24 converts a video signal (analog electrical signal) indicating a subject that is output from image pickup device 22b, into a digital signal for output. Imaging unit 2 may further include, for example, a control processing circuit for controlling each unit.

As described later, in image processing according to the present embodiment, a stereo image (an image for the right eye and an image for the left eye) can be generated using an input image captured by one camera. As long as a corresponding point search process for generating a distance image as described later can be executed, the function and the performance (typically, the pixel size of the acquired input image, for example) may not be the same between first camera 21 and second camera 22.

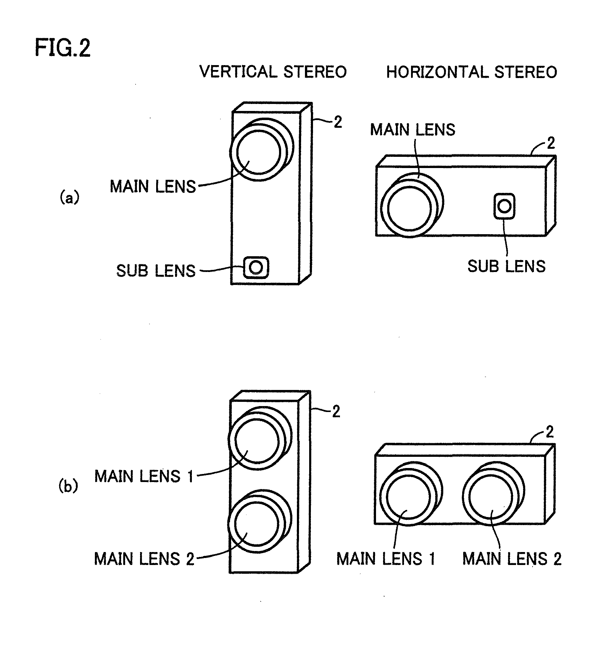

Fig. 2 is a diagram showing a specific configuration example of imaging unit 2 shown in Fig. 1. An example of imaging unit 2 shown in Fig. 2(a) has a configuration in which a main lens with an optical zoom function and a sub lens without an optical zoom function are combined. An example of imaging unit 2 shown in Fig. 2(b) has a configuration in which two main lenses both having an optical zoom function are combined.

In the image processing method according to the present embodiment, as long as the respective lines of sight directions (points of view) of the cameras for the same subject are different, the arrangement of the main lens and the sub lens (vertical arrangement or horizontal arrangement) may be set as desired in imaging unit 2. That is, imaging unit 2 shown in Fig. 2(a) or Fig. 2(b) may be arranged in the longitudinal direction to capture an image or may be arranged in the lateral direction to capture an image.

The captured image example (image example) described later is acquired with a configuration in which two lenses of the same kind (without an optical zoom function) are arranged at a predetermined distance from each other in the vertical direction.

In the image processing method according to the present embodiment, input image 1 and input image 2 may not necessarily be acquired at the same time. That is, as long as the positional relationship of imaging unit 2 relative to a subject is substantially the same at the image capturing timing for acquiring input image 1 and input image 2, input image 1 and input image 2 may be acquired at respective different timings. In the image processing method according to the present embodiment, a stereo image for performing stereoscopic display can be generated not only as a still image but also as moving images. In this case, a series of images can be acquired with each camera by capturing images of a subject successively in time while first camera 21 and second camera 22 are kept synchronized with each other. In the image processing method according to the present embodiment, the input image may be either a color image or a monochrome image.

Referring to Fig. 1 again, image processing unit 3 generates a stereo image (an image for the right eye and an image for the left eye) for stereoscopically displaying a subject by carrying out the image processing method according to the present embodiment on a pair of input images acquired by imaging unit 2. More specifically, image processing unit 3 includes a corresponding point search unit 30, a distance image generation unit 32, an area determination unit 34, a smoothing processing unit 36, and a 3D image generation unit 38.

Corresponding point search unit 30 performs a corresponding point search process on a pair of input images (input image 1 and input image 2). This corresponding point search process can typically use the POC (Phase-Only Correlation) method, the SAD (Sum of Absolute Difference) method, the SSD (Sum of Squared Difference) method, the NCC (Normalized Cross Correlation) method, and the like. That is, corresponding point search unit 30 searches for a correspondence for each point of a subject between input image 1 and input image 2.

Distance image generation unit 32 acquires distance information for the two input images. This distance information is calculated based on the difference of information for the same subject. Typically, distance image generation unit 32 calculates distance information from the correspondence between the input images for each point of the subject that is searched for by corresponding point search unit 30. Imaging unit 2 captures images of a subject from different points of view. Therefore, between two input images, pixels representing a given point (point of interest) of a subject are shifted from each other by a distance in accordance with the distance between imaging unit 2 and the point of the subject. In the present description, the difference between a coordinate on the image coordinate system of a pixel corresponding to the point of interest in input image 1 and a coordinate on the image coordinate system of a pixel corresponding to the point of interest in input image 2 is referred to as "disparity". Distance image generation unit 32 calculates disparity for each point of interest of the subject that is searched for by corresponding point search unit 30.

Disparity is an index value indicating the distance from imaging unit 2 to the corresponding point of interest of the subject. The greater is the disparity, the shorter is the distance from imaging unit 2 to the corresponding point of interest of the subject, which means more proximate to imaging unit 2. In the present description, the disparity and the distance of each point of the subject from the imaging unit 2 that is indicated by the disparity are collectively referred to as "distance information".

The direction in which disparity is produced between input images depends on the positional relationship between first camera 21 and second camera 22 in imaging unit 2. For example, when first camera 21 and second camera 22 are arranged at a predetermined distance from each other in the vertical direction, the disparity between input image 1 and input image 2 is produced in the vertical direction.

Distance image generation unit 32 calculates a distance image (disparity image) which is calculated as distance information for each point of the subject and represents each of the calculated distance information associated with a coordinate on the image coordinate system. An example of the distance image will be described later.

In corresponding point search unit 30, corresponding point search is conducted for each of unit areas having a predetermined pixel size. Primitively, the distance image is generated as an image in which one unit area is one pixel.

As described above, distance image generation unit 32 acquires distance information indicating a distance relative to the position where imaging unit 2 is arranged, for each of unit areas having a predetermined pixel size, based on the correspondence for each point of the subject that is calculated by corresponding point search unit 30. Distance image generation unit 32 further generates a distance image representing the acquired distance information.

In the image processing method according to the present embodiment, the pixel size of the unit area that is a processing unit in the corresponding point search process by corresponding point search unit 30 and the distance image generation process by distance image generation unit 32 is varied between the vertical direction and the horizontal direction, thereby alleviating image distortion produced when a subject is stereoscopically displayed. That is, the unit areas are defined by a pixel interval corresponding to the vertical direction of the input image and a pixel interval corresponding to the horizontal direction that is different from the pixel interval corresponding to the vertical direction.

Area determination unit 34 determines a feature area included in a subject of the input image. The feature area is an area in which a distortion produced in the generated stereo image is expected to be conspicuous. Specific examples thereof include an area in which an artifact such as a straight line is present (hereinafter also referred to as "artifact area"), and a near and far conflict area (an area in which variations in distance are relatively great). Based on the information of the feature area determined by area determination unit 34, corresponding point search unit 30 and distance image generation unit 32 change the pixel size of the unit area to be used in the corresponding point search and the distance image generation. That is, corresponding point search unit 30 and distance image generation unit 32 change the pixel size of the unit area that includes the extracted feature area.

Smoothing processing unit 36 performs smoothing processing on the distance image generated by distance image generation unit 32 to convert the distance image into a pixel size corresponding to the input image. That is, since the distance image is primitively generated as an image in which a unit area is one pixel, smoothing processing unit 36 converts the pixel size in order to calculate distance information for each pixel that constitutes the input image, from the distance image. In the present embodiment, a unit area having a different pixel size between the vertical direction and the horizontal direction is used. Therefore, smoothing processing unit 36 may perform smoothing processing on the distance image in accordance with the directivity of the pixel size of this unit area.

3 D image generation unit 38 shifts each pixel that constitutes the input image by the amount of the corresponding distance information (the number of pixels) based on the distance image obtained by smoothing processing unit 36 to generate a stereo image (an image for the right eye and an image for the left eye) for stereoscopically displaying a subject. For example, 3D image generation unit 38 uses input image 1 as an image for the left eye, and uses an image obtained by shifting input image 1 by the amount of distance information (the number of pixels) corresponding to each pixel thereof in the horizontal direction, as an image for the right eye. That is, as for between the image for the right eye and the image for the left eye, each point of the subject is represented with a distance corresponding to the distance information (the number of pixels) shown by the distance image, that is, with disparity in accordance with the distance information (the number of pixels). Accordingly, the subject can be stereoscopically displayed.

As described above, 3D image generation unit 38 generates a stereo image for stereoscopically displaying a subject by shifting pixels included in the input image in the horizontal direction. Here, since a distortion of an image along the vertical direction is likely to be more conspicuous than in the horizontal direction in which disparity is produced, the corresponding point search process and the distance image generation process are executed with the amount of information in the vertical direction being reduced. That is, the pixel size in the vertical direction of a unit area that is a processing unit in the corresponding point search process and the distance image generation process is set larger than the pixel size in the horizontal direction. Accordingly, the amount of information in the vertical direction is compressed for a pair of input images (input image 1 and input image 2).

When the generated stereo image is rotated to be used in stereoscopic display, disparity has to be given in the horizontal direction. In this case, therefore, the pixel size in the horizontal direction of a unit area is set to be larger than the pixel size in the vertical direction.

Accordingly, the effects of distortion in the vertical direction of an image can be alleviated, and the processing volume in relation to the image processing can also be reduced. That is, the pixel interval in the vertical direction that defines a unit area is set shorter than the pixel interval in the horizontal direction.

3D image output unit 4 outputs the stereo image (an image for the right eye and an image for the left eye) generated by image processing unit 3 to, for example, a display device.

The details of processing operation of each unit will be described later.

Although image processing system 1 shown in Fig. 1 can be configured such that each unit is independent, it is generally implemented as a digital camera or a personal computer described below. Implementations of image processing system 1 according to the present embodiment are described.

### (b2: Implementation Example 1)

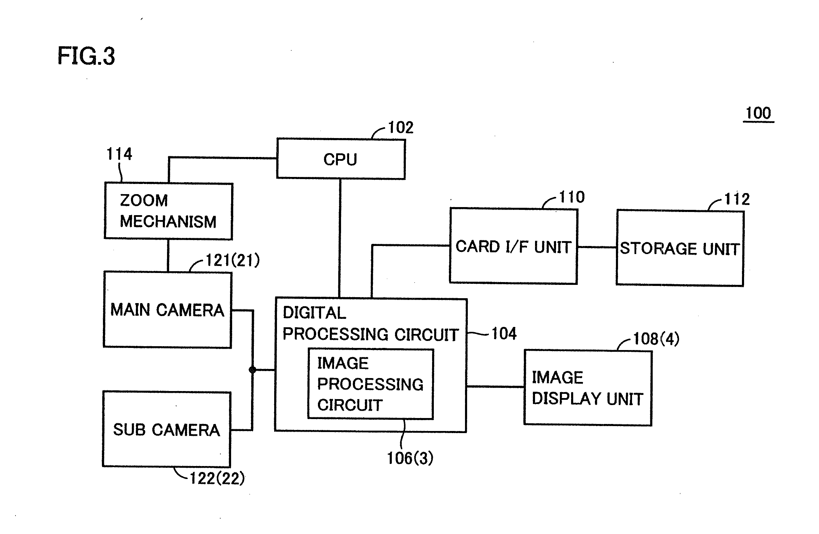

Fig. 3 is a block diagram showing a configuration of a digital camera 100 that implements image processing system 1 shown in Fig. 1. Digital camera 100 shown in Fig. 3 is provided with two cameras (a main camera 121 and a sub camera 122) and can capture a stereo image for stereoscopically displaying a subject. In Fig. 3, components corresponding to the blocks that constitute image processing system 1 shown in Fig. 1 are denoted with the same reference signs as in Fig. 1.

In digital camera 100, an input image acquired by capturing an image of a subject with main camera 121 is stored and output, and an input image acquired by capturing an image of the subject with sub camera 122 is mainly used for the corresponding point search process and the distance image generation process described above. It is therefore assumed that an optical zoom function is installed only in main camera 121.

Referring to Fig. 3, digital camera 100 includes a CPU (Central Processing Unit) 102, a digital processing circuit 104, an image display unit 108, a card interface (I/F) 110, a storage unit 112, a zoom mechanism 114, main camera 121, and sub camera 122.

CPU 102 executes a program stored beforehand for controlling the entire digital camera 100. Digital processing circuit 104 executes a variety of digital processing including image processing according to the present embodiment. Digital processing circuit 104 is typically configured with a DSP (Digital Signal Processor), an ASIC (Application Specific Integrated Circuit), an LSI (Large Scale Integration), a FPGA (Field-Programmable Gate Array), or the like. This digital processing circuit 104 includes an image processing circuit 106 for implementing the function provided by image processing unit 3 shown in Fig. 1.

Image display unit 108 displays an image provided by main camera 121 and/or sub camera 122, an image generated by digital processing circuit 104 (image processing circuit 106), a variety of setting information in relation to digital camera 100, and a control GUI (Graphic User Interface) screen. Preferably, image display unit 108 can stereoscopically display a subject using a stereo image generated by image processing circuit 106. In this case, image display unit 108 is configured with a given display device supporting a three-dimensional display mode (a liquid crystal display for three-dimensional display). Parallax barrier technology can be employed as such a three-dimensional display mode. In this parallax barrier technology, a parallax barrier is provided on a liquid crystal display surface to allow the user to view an image for the right eye with the right eye and to view an image for the left eye with the left eye. Alternatively, shutter glasses technology may be employed. In this shutter glasses technology, an image for the right eye and an image for the left eye are alternately switched and displayed at high speed. The user can enjoy stereoscopic display by wearing special glasses provided with a shutter opened and closed in synchronization with the switching of images.

Card interface (I/F) 110 is an interface for writing image data generated by image processing circuit 106 into storage unit 112 or reading image data from storage unit 112. Storage unit 112 is a storage device for storing image data generated by image processing circuit 106 and a variety of information (control parameters and setting values of operation modes of digital camera 100). Storage unit 112 is formed of a flash memory, an optical disk, or a magnetic disc for storing data in a nonvolatile manner.

Zoom mechanism 114 is a mechanism for changing imaging magnifications of main camera 121. Zoom mechanism 114 typically includes a servo motor and the like and drives lenses that constitute main camera 121 to change the focal length.

Main camera 121 generates an input image for generating a stereo image by capturing an image of a subject. Main camera 121 is formed of a plurality of lenses driven by zoom mechanism 114. Sub camera 122 is used for the corresponding point search process and the distance image generation process as described later and captures an image of the same subject as captured by main camera 121, from a different point of view.

In this manner, digital camera 100 shown in Fig. 3 implements image processing system 1 according to the embodiment as a whole as a single device. That is, the user can stereoscopically view a subject on image display unit 108 by capturing an image of the subject using digital camera 100.

### (b2: Implementation Example 2)

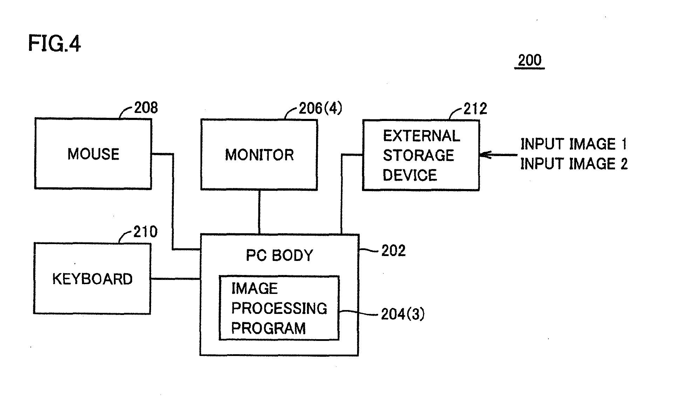

Fig. 4 is a block diagram showing a configuration of a personal computer 200 that implements image processing system 1 shown in Fig. 1. In personal computer 200 shown in Fig. 4, imaging unit 2 for acquiring a pair of input images is not installed, and a pair of input images (input image 1 and input image 2) acquired by any given imaging unit 2 is input from the outside. Such a configuration may also be included in image processing system 1 according to the embodiment of the present invention. In Fig. 4, components corresponding to the blocks that constitute image processing system 1 shown in Fig. 1 are denoted with the same reference signs as in Fig. 1.

Referring to Fig. 4, personal computer 200 includes a personal computer body 202, a monitor 206, a mouse 208, a keyboard 210, and an external storage device 212.

Personal computer body 202 is typically a general computer in accordance with a general architecture and includes, as basic components, a CPU, a RAM (Random Access Memory), and a ROM (Read Only Memory). Personal computer body 202 allows an image processing program 204 to be executed for implementing the function provided by image processing unit 3 shown in Fig. 1. Such image processing program 204 is stored and distributed in a recording medium such as a CD-ROM (Compact Disk-Read Only Memory) or distributed from a server device through a network. Image processing program 204 is then stored into a storage area such as a hard disk of personal computer body 202.

Such image processing program 204 may be configured to implement processing by invoking necessary modules at predetermined timing and order, of program modules provided as part of an operating system (OS) executed in personal computer body 202. In this case, image processing program 204 per se does not include the modules provided by the OS and implements image processing in cooperation with the OS. Image processing program 204 may not be an independent single program but may be incorporated into and provided as part of any given program. Also in this case, image processing program 204 per se does not include the modules shared by the given program and implements image processing in cooperation with the given program. Such image processing program 204 that does not include some modules does not depart from the spirit of image processing system 1 according to the present embodiment.

Some or all of the functions provided by image processing program 204 may be implemented by dedicated hardware.

Monitor 206 displays a GUI screen provided by the operating system (OS) and an image generated by image processing program 204. Preferably, monitor 206 can stereoscopically display a subject using a stereo image generated by image processing program 204, in the same manner as in image display unit 108 shown in Fig. 3. In this case, monitor 206 is configured with a display device using the parallax barrier technology or the shutter glasses technology in the same manner as described with image display unit 108.

Mouse 208 and keyboard 210 each accept user operation and output the content of the accepted user operation to personal computer body 202.

External storage device 212 stores a pair of input images (input image 1 and input image 2) acquired by any method and outputs the pair of input images to personal computer body 202. Examples of external storage device 212 include a flash memory, an optical disk, a magnetic disc, and any other devices that store data in a nonvolatile manner.

In this manner, personal computer 200 shown in Fig. 4 implements part of image processing system 1 according to the present embodiment as a single device. Using such personal computer 200, the user can generate a stereo image (an image for the right eye and an image for the left eye) for stereoscopically displaying a subject from a pair of input images acquired by capturing images of the subject from different points of view using any given imaging unit (stereo camera). In addition, the user can enjoy stereoscopic display by displaying the generated stereo image on monitor 206.

### <C. Related Image Processing Method>

The content of an image processing method related to the present invention will be described first, for ease of understanding of the content of the image processing method according to the present embodiment.

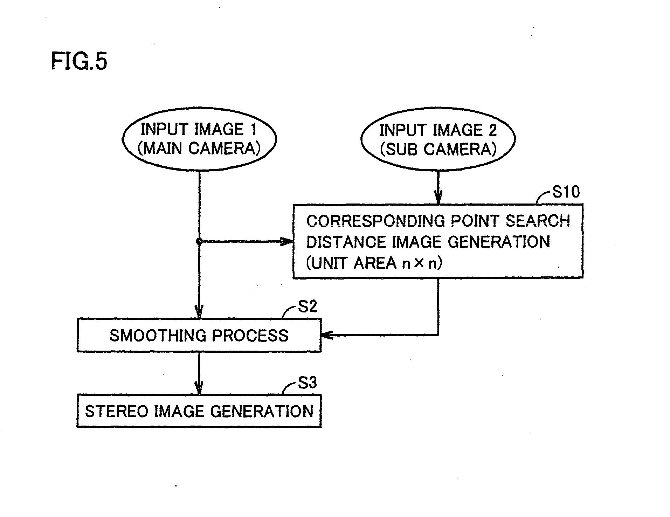

Fig. 5 is a block diagram schematically showing a procedure of the image processing method related to the present invention. Referring to Fig. 5, in the image processing method related to the present invention, processing in three stages, namely, a corresponding point search process and a distance image generation process (step S 10), a smoothing process (step S2), and a stereo image generation process (step S3), is performed on input image 1 and input image 2 acquired by main camera 121 and sub camera 122 capturing images of the same subject. Each step will be detailed below.

### (c1: Input Image)

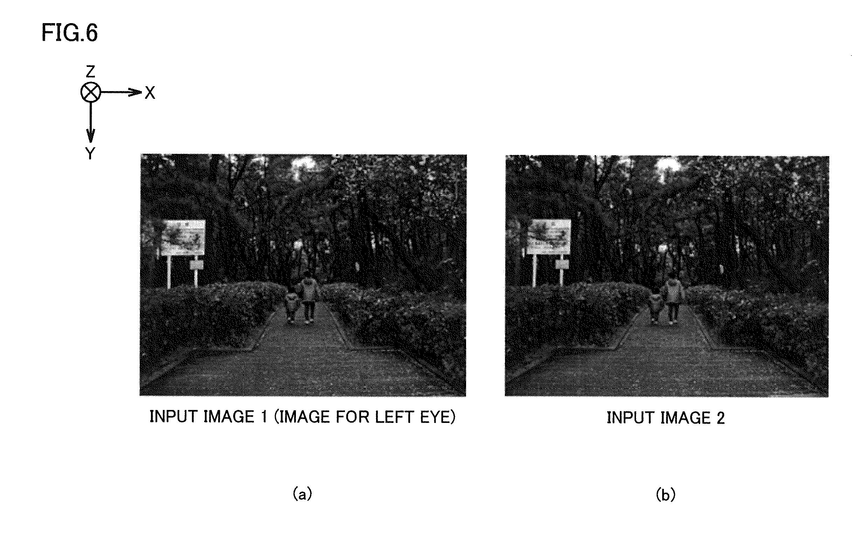

Fig. 6 is a diagram showing an example of a pair of input images captured by imaging unit 2 shown in Fig. 1. Fig. 6(a) shows input image 1 captured by main camera 121 and Fig. 6(b) shows input image 2 captured by sub camera 122. In the present embodiment, the case where main camera 121 and sub camera 122 are arranged in the vertical direction (main camera 121 above and sub camera 122 below) is illustrated as a typical example.

Input image 1 shown in Fig. 6(a) is used as one image (in this example, the image for the left eye) of the stereo image finally output.

In Fig. 6, an image coordinate system is defined for the sake of convenience for ease of explanation. More specifically, an orthogonal coordinate system is employed in which the horizontal direction of the input image is the X axis and the vertical direction of the input image is the Y axis. The origin of the X axis and the Y axis is assumed at the upper left end of the input image for the sake of convenience. The line of sight direction of imaging unit 2 (Fig. 1) is the Z axis. The orthogonal coordinate system may be used in explanation of the other drawings in the present description.

As described above, since imaging unit 2 having main camera 121 and sub camera 122 arranged in the vertical direction is used, disparity is produced in the Y axis direction between input image 1 shown in Fig. 6(a) and input image 2 shown in Fig. 6(b).

The subject of a pair of input images shown in Fig. 6 includes a "signboard" in the left area. This "signboard" is an example of the "artifact" described later. The artifact means an object constituted to mostly include graphical primitive elements such as a straight line. Here, the "graphical primitive" means a graphics, for example, such as a straight line, a quadric curve, a circle (or an arc), and an ellipse (or an elliptical arc), having a shape and/or size that can be specified in a coordinate space by giving a specific numerical value as a parameter in a predetermined function.

In the lower region of the "signboard", "bush" located closer to imaging unit 2 than the "signboard" is captured as a subject. In the neighborhood of the upper side of the "signboard", "trees" located farther from imaging unit 2 than the "signboard" is captured as a subject.

"Bush," "signboard," "trees" are thus located around the area in which the "signboard" is present in the input image, in the order of increasing distance (in the Z axis direction) from imaging unit 2.

### (c2: Corresponding Point Search Process and Distance Image Generation Process)

When a pair of input images (input image 1 and input image 2) as shown in Fig. 6 is acquired, the corresponding point search process (step S10 in Fig. 5) between the input images is performed. This corresponding point search process is performed by corresponding point search unit 30 shown in Fig. 1. In this corresponding point search process, the pixel (coordinate value) of the other input image is specified that corresponds to each point of interest of one of the input images. In such a corresponding point search process, a matching process using the POC method, the SAD method, the SSD method, the NCC method, and the like is used.

Subsequently, the distance image generation process for generating a distance image showing distance information associated with the coordinate of each point of the subject is performed based on the correspondence between the point of interest and the corresponding point specified by the corresponding point search process. This distance image generation process is performed by distance image generation unit 32 shown in Fig. 1. In this distance image generation process, the difference (disparity) between the coordinate of the point of interest in the image coordinate system of input image 1 and the coordinate of the corresponding point in the image coordinate system of input image 2 is calculated for each of points of interest. The calculated disparity is stored in association with the corresponding coordinate of the point of interest of input image 1. As distance information, the coordinate of input image 1 and the corresponding disparity are associated for each of points of interest searched for through the corresponding point search process. A distance image representing the disparity of each point corresponding to the image coordinate system of input image 1 is generated by arranging the distance information to be associated with the pixel arrangement of input image 1.

As the corresponding point search process and the distance image generation process in this manner, the method described in Japanese Laid-Open Patent Publication No. 2008-216127 (Patent Document 1) may be employed. Although Japanese Laid-Open Patent Publication No. 2008-216127 discloses a method for calculating disparity (distance information) at the granularity of sub-pixels, disparity (distance information) may be calculated at the granularity of pixels.

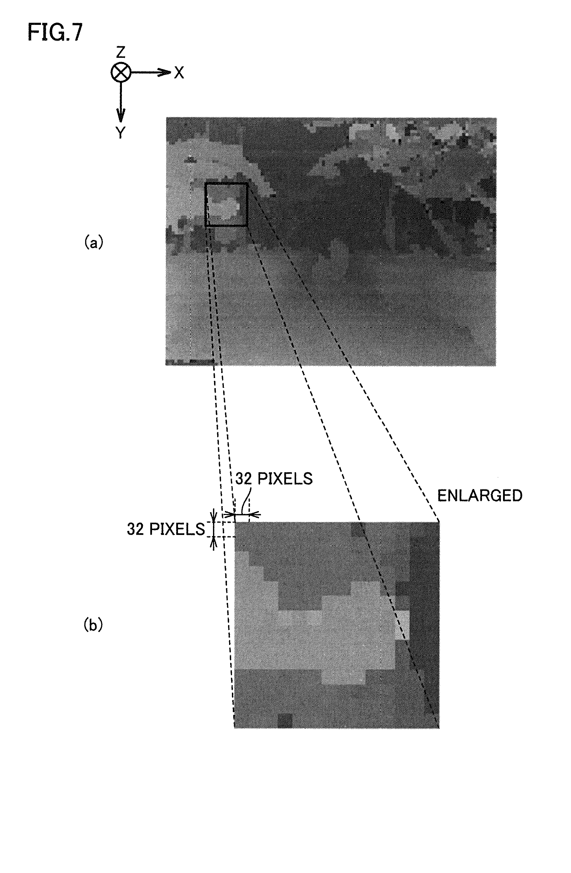

Fig. 7 is a diagram showing an example of a distance image generated from a pair of input images shown in Fig. 6 in accordance with the image processing method related to the present invention. Specifically, Fig. 7(a) shows the entire distance image and Fig. 7(b) shows an enlarged view of partial area shown in Fig. 7(a). As shown in Fig. 7, the magnitude of disparity (distance information) associated with each point of each point of input image 1 is represented by a grayscale of the corresponding point.

In the corresponding point search process and the distance image generation process described above, since the point of interest and its corresponding point are specified by performing correlation operations, the corresponding point is searched for, for each of unit areas having a predetermined pixel size. Fig. 7 shows an example in which corresponding point search is performed for each unit area of 32 pixels × 32 pixels. Specifically, in the example shown in Fig. 7, the corresponding point is searched for, for each unit area defined by a 32-pixel interval in both of the X axis and the Y axis, and the distance from the found corresponding point is calculated. The distance image indicating the distance from the found corresponding point is generated such that it agrees with the pixel size of the input image. For example, when input image 1 has the size of 3456 pixels × 2592 pixels, distances are calculated at 108 × 81 search points, and the distance image corresponding to the pixel size of the input image is generated from each of the calculated distances.

### (c3: Smoothing Process)

Upon acquisition of the distance image, the smoothing processing process (step S2 in Fig. 5) is performed on the acquired distance image. This smoothing process is performed by smoothing processing unit 36 shown in Fig. 1. In this smoothing process, the distance image is averaged as a whole.

An example of implementation of such a smoothing process is a method using a two-dimensional filter having a predetermined size.

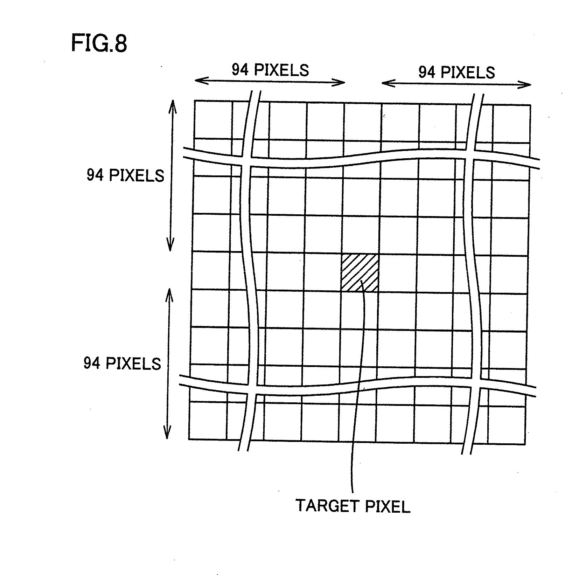

Fig. 8 is a diagram showing an example of an averaging filter used in a smoothing process in Fig. 5 (step S2). In the smoothing process, for example, an averaging filter of 189 pixels × 189 pixels as shown in Fig. 8 is applied. In the averaging filter, the mean value of pixel values (disparity) of the distance image included in a range of 189 pixels in the vertical direction and 189 pixels in the horizontal direction with a target pixel at the center is calculated as a new pixel value of the target pixel. More specifically, a new pixel value of a target pixel is calculated by dividing the sum of pixel values of the pixels included in the filter by the pixel size of the filter.

The mean value of pixels sorted out and extracted at a predetermined interval (for example, 20 pixels) may be used rather than operation of all the pixels included in the filter. Such sorting processing may also achieve the same smoothing result as in the case where the mean value of all the pixels is used. In such a case, the processing volume can be reduced by performing the sorting processing.

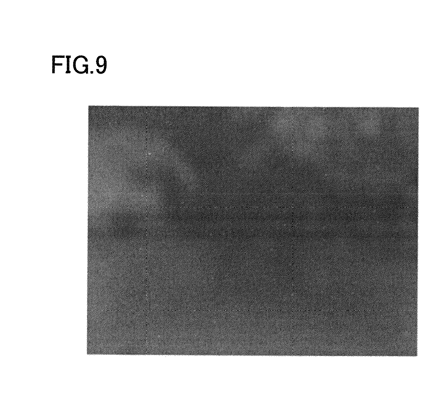

Fig. 9 is a diagram showing a result of the smoothing process performed on the distance image shown in Fig. 7. In the distance image after the smoothing process as shown in Fig. 9, it is understood that the pixel values (disparity) do not vary greatly between adjacent pixels.

The pixel size of the distance image obtained through the smoothing process is preferably the same pixel size as the input image. With the same pixel size, the distance for each pixel can be decided in a one-to-one relationship in the stereo image generation process described later.

### (c4: Stereo Image Generation Process)

Upon acquisition of the distance image after the smoothing process, the stereo image generation process (step S3 in Fig. 5) is performed using the acquired distance image. The stereo image generation process is performed by 3D image generation unit 38 shown in Fig. 1. In this stereo image generation process, an image for the right eye is generated by shifting each pixel of input image 1 (an image for the left eye) by the corresponding distance.

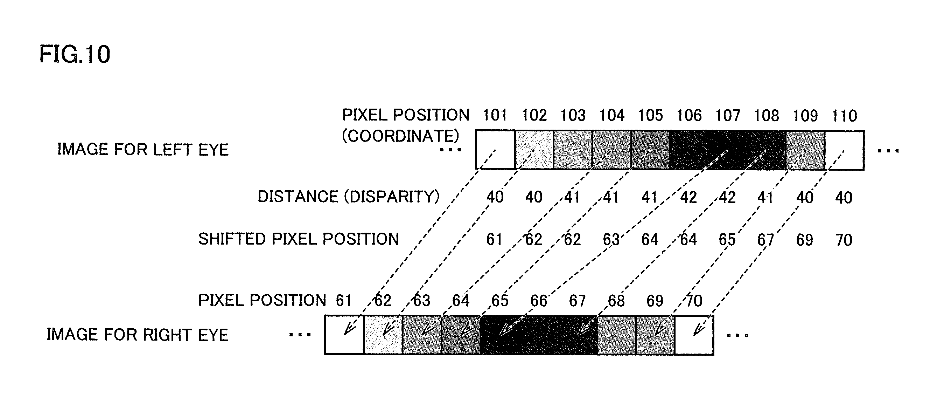

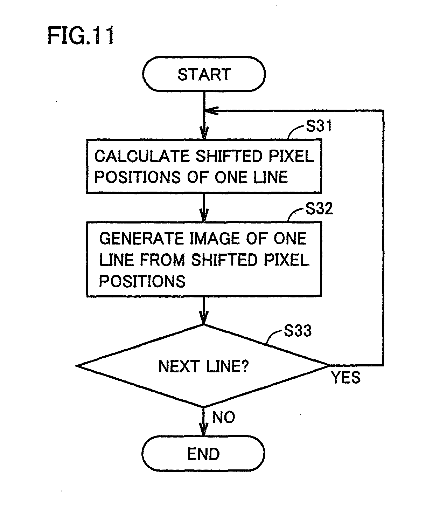

Fig. 10 is a diagram for explaining the process procedure in the stereo image generation process (step S3) in Fig. 5. Fig. 11 is a flowchart showing the process procedure of the stereo image generation process shown in Fig. 10.

Referring to Fig. 10, in the stereo image generation process, a stereo image (an image for the right eye and an image for the left eye) is generated from input image 1, based on the distance image. In the present image processing method, input image 1 is used as it is as an image for the left eye, and an image for the right eye is generated by shifting each pixel of input image 1 by the corresponding distance (disparity), in view of simplification of the processing.

In order to stereoscopically display a subject, the corresponding pixels are spaced apart from each other by a designated distance (disparity) between an image for the right eye and an image for the left eye. An image for the right eye and an image for the left eye therefore each may be generated from the input image.

In the present embodiment, an image for the right eye is generated by shifting the position of a pixel line by line that constitutes input image 1 (an image for the left eye). Fig. 10 shows ten pixels with pixel positions (coordinates) of "101", "102", ... , "110". It is assumed that the distances (disparity) corresponding to the pixels at the pixel positions are "40", "40", "41 ", "41 ", "41", "42", "42", "41 ", "40", "40". Using these information, the shifted pixel position (coordinate in the image for the right eye) is calculated for each pixel. More specifically, the shifted pixel positions are calculated for the pixels in one line in accordance with (the shifted pixel position) = (coordinate in the image for the left eye) - (the corresponding distance (disparity)).

An image of the corresponding one line of the image for the right eye is then generated based on each pixel value and the corresponding shifted pixel position. Here, the corresponding pixel may not exist depending on the value of the distance (disparity). In the example shown in Fig. 10, information of pixels at the pixel positions "66" and "68" of the image for the right eye does not exist. In such a case, the pixel value of the pixel that is lacking is interpolated using information from the adjacent pixels.

The image for the right eye is generated by repeating such processing for all the lines included in the input image.

The direction in which the pixel position is shifted is the direction in which disparity is to be produced, specifically, corresponds to the direction that is the horizontal direction when being displayed to the user.

The process procedure in this manner is as shown in Fig. 11. Specifically, referring to Fig. 11,3D image generation unit 38 (Fig. 5) calculates the shifted pixel position for each of pixels of one line of input image 1 (step S31). Then, 3D image generation unit 38 generates an image (image for the right eye) of one line from the shifted pixel positions calculated in step S1 (step S32).

Thereafter, 3D image generation unit 38 (Fig. 5) determines whether there exists a line that has not yet been processed in the input image (step S33). If a line not yet processed exists in the input image (NO in step S33), the next line is selected, and the processing in steps S31 and S32 is repeated.

If all the lines of the input image have been processed (YES in step S33), 3D input image generation unit 38 outputs the generated image for the right eye together with input image 1 (image for the left eye). The process then ends.

### (c5: Distortion Produced in Image)

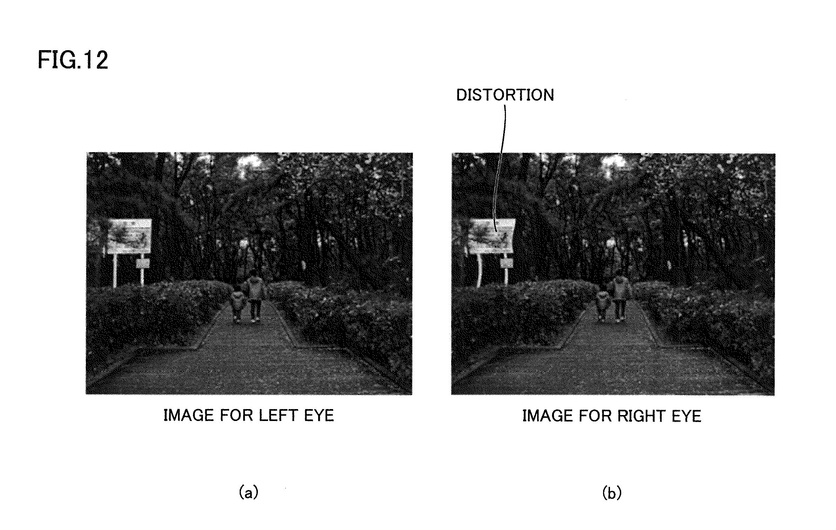

Fig. 12 is a diagram showing an example of a stereo image generated through the image processing method related to the present invention. Fig. 12(a) shows an image for the left eye, and Fig. 12(b) shows an image for the right eye.

In the image for the right eye shown in Fig. 12(b), an image distortion is produced in the "signboard" in the left area. This is possibly because the subject includes "bush" in front of the "signboard" (the side close to imaging unit 2) and "trees" on the back of the "signboard" (the side far from imaging unit 2), and accordingly, the distances (disparity) associated with the pixels surrounding the "signboard" vary relatively greatly.

In particular, the user has the notion that the "signboard" which is an artifact has a linear structure, and therefore feels uncomfortable with the "signboard" displayed in a curved shape.

In this manner, the subject having an area in which the distance from the imaging means greatly varies (hereinafter also referred to as "near and far conflict area") is likely to cause a distortion, and if an artifact having a straight line or the like is present in this near and far conflict area, the distortion is particularly noticeable.

The image processing method according to the present embodiment therefore provides a method for suppressing occurrence of such a distortion.

### <D. Basic Concept>

In the image processing method according to the present embodiment, the sensitivities of the distance information calculated for the vertical direction and the horizontal direction of the input image are varied from each other during the process of generating a distance image for the subject. As such a method for varying the sensitivities, the pixel size of a unit area that is a processing unit in the corresponding point search process and the distance image generation process is varied between the vertical direction and the horizontal direction.

More specifically, when a stereo image is generated, the sensitivity in distance calculation is reduced for the direction orthogonal to the direction in which disparity is to be produced. The reason for this is that an image distortion is not conspicuous in the direction in which disparity is produced partly because the positions of pixels are shifted, whereas an image distortion is likely to be conspicuous in the direction orthogonal to the direction in which disparity is to be produced. In the image processing method according to the present embodiment, the pixel interval in the vertical direction that defines a unit area is set shorter than the pixel interval in the horizontal direction. For example, in the image processing method related to the present invention, a unit area of 32 pixels × 32 pixels (32-pixel interval in both of the vertical direction and the horizontal direction) is employed. By contrast, a coarser pixel interval is employed for the vertical direction (the direction in which parallax is not produced). Specifically, the corresponding point search process and the distance image generation process are performed in a unit area of 64 pixels in the vertical direction and 32 pixels in the horizontal direction.

In other words, as for the direction in which disparity is not produced, a distance image is generated with information of the image being compressed. Accordingly, while the calculation accuracy is kept for the distances of the pixels arranged in the direction in which disparity is produced, the calculation sensitivity is relaxed for the distances of the pixels arranged in the direction in which parallax is not produced. By generating a stereo image by the image processing method as described above, crisp stereoscopic display can be implemented while suppressing image distortion.

Some embodiments in accordance with this basic concept will be described below.

### <E. First Embodiment>

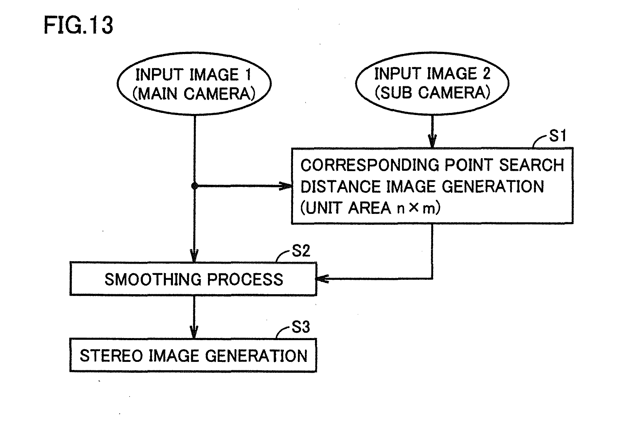

Fig. 13 is a block diagram schematically showing a procedure of the image processing method according to a first embodiment of the present invention. The schematic block diagram shown in Fig. 13 differs from the schematic block diagram shown in Fig. 5 in the processing of the corresponding point search process and the distance image generation process (step S1). The other processes are the same as the processes described with reference to Fig. 5, and a detailed description therefore will not be repeated.

In the corresponding point search process and the distance image generation process shown in step S1 in Fig. 13, the pixel size of a unit area used in the processing is varied between the vertical direction and the horizontal direction. As a typical example, in step S1 in Fig. 13, a 32-pixel interval is set in the horizontal direction in the same manner as in the processing shown in Fig. 5, while the processing is performed for each unit area defined by a coarser 64-pixel interval in the vertical direction. When disparity is produced in the vertical direction, the relationship of pixel interval is reversed between the horizontal direction and the vertical direction.

In this manner, the corresponding point search and the distance calculation are carried out for each unit area defined by the pixel interval (32 pixels) corresponding to the horizontal direction in input image 1 and the pixel interval (64 pixels) corresponding to the vertical direction. In the distance image calculated in step S 1, the respective distances are calculated by the units obtained by dividing the input image by 32 pixels in the horizontal direction × 64 pixels in the vertical direction.

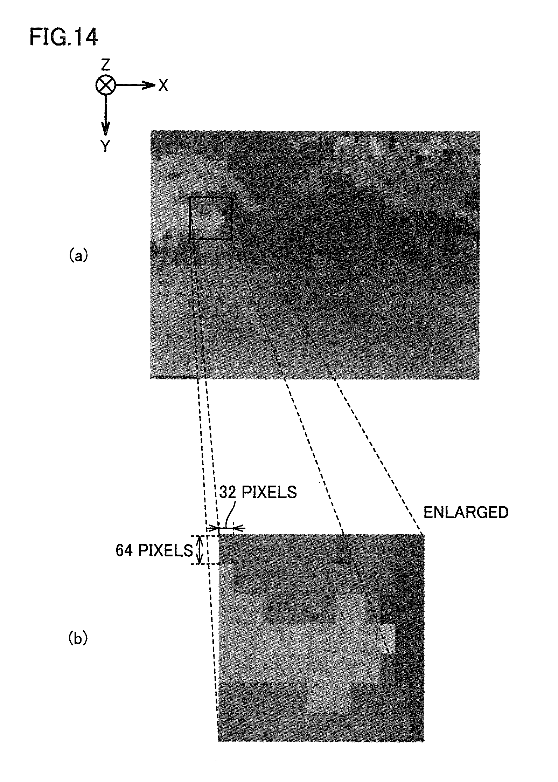

Fig. 14 is a diagram showing an example of a distance image generated from a pair of input images shown in Fig. 6 in accordance with the image processing method according to the first embodiment of the present invention. Specifically, Fig. 14(a) shows the entire distance image and Fig. 14(b) shows an enlarged view of partial area shown in Fig. 14(a).

As shown in Fig. 14, one pixel of the distance image corresponds to an area of 32 pixels in the horizontal direction × 64 pixels in the vertical direction of input image 1.

The smoothing process (step S2) shown in Fig. 5 is applied to the distance image acquired in this manner. For example, the averaging filter of 189 pixels × 189 pixels as shown in Fig. 8 is applied in the same manner as in the image processing method related to the present invention.

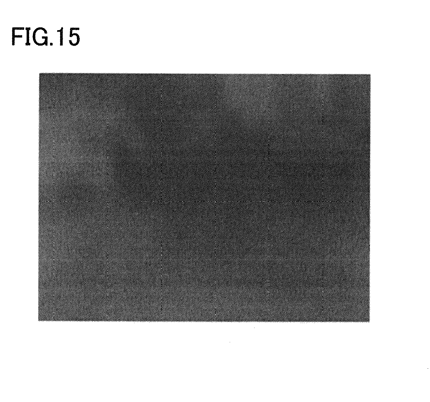

Fig. 15 is a diagram showing a result of the smoothing process performed on the distance image shown in Fig. 14. The distance image after the smoothing process shown in Fig. 15 is generally equalized more intensively in the vertical direction than the result of the smoothing process shown in Fig. 8. That is, the change in the vertical direction of the distance image shown in Fig. 15 is gentler than the change in the vertical direction of the distance image shown in Fig. 9. Accordingly, the distances in the vertical direction of the distance image shown in Fig. 15 are generally unified.

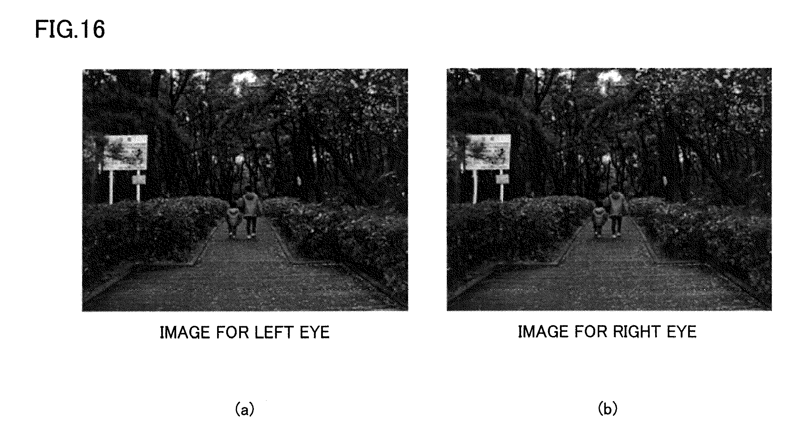

A stereo image is generated from the input image using the distance image after the smoothing process shown in Fig. 15. Fig. 16 is a diagram showing an example of a stereo image generated through the image processing method according to the first embodiment of the present invention. Fig. 16(a) shows an image for the left eye and Fig. 16(b) shows an image for the right eye.

As shown in Fig. 16(b), due to the effect of generally unified distances in the vertical direction of the distance image after the smoothing process as described above, the distortion produced in the "signboard" is suppressed, unlike Fig. 12(b). That is, according to the present embodiment, a stereo image in which image distortion is not conspicuous can be acquired.

### <F. Second Embodiment>

An image processing method according to a second embodiment of the present invention will now be described.

### (fl. Overview)

In the present embodiment, in order to suppress a conspicuous distortion produced in a stereo image, the corresponding point search process and the distance image generation process are performed for each unit area having a different pixel size between the vertical direction and the horizontal direction, for the area including an "artifact" in a subject. Specifically, a distance image is generated with a unit area having a different pixel size between the vertical direction and the horizontal direction, for the area in which an "artifact" is present, whereas a distance image is generated with a normal unit area for the area in which an "artifact" is absent. Accordingly, a distance (disparity) is calculated such that a distortion is less likely to be produced, for the image of the "artifact" and its surrounding area in which a distortion is conspicuous, and the accuracy of calculating a distance (disparity) is enhanced for the other area. By using a stereo image generated through such a method, crisp stereoscopic display can be performed while suppressing image distortion.

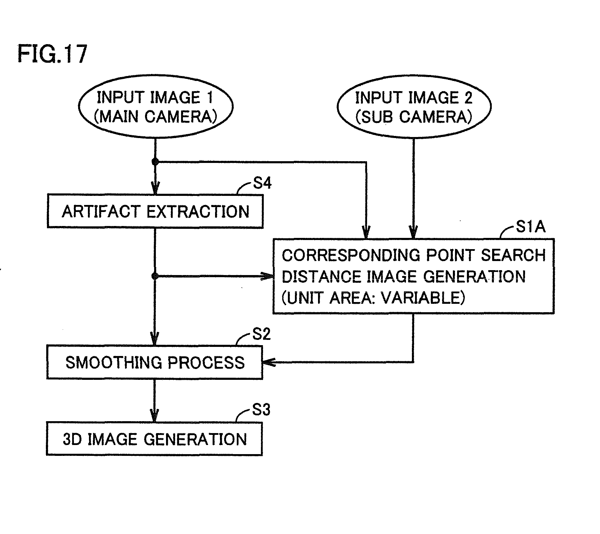

Fig. 17 is a block diagram schematically showing a procedure of the image processing method according to the second embodiment of the present invention. The schematic block diagram shown in Fig. 17 differs from the schematic block diagram shown in Fig. 13 in the process contents of the corresponding point search process and the distance image generation process (step S1A) and in that an artifact extraction process (step S4) is added. The other processes are the same as the corresponding processes in Fig. 13, and a detailed description is therefore not repeated.

In the corresponding point search process and the distance image generation process shown in step S1A in Fig. 17, for the area (artifact area) (and the vicinity thereof) in which the artifact extracted in the artifact extraction process (step S4) is present, the pixel size of the unit area to be used in the processing is varied between the vertical direction and the horizontal direction. As a typical example, in step S1A in Fig. 17, for the artifact area, a distance is calculated with the unit obtained by dividing by 32 pixels in the horizontal direction × 64 pixels in the vertical direction, whereas for the other area, a distance is calculated with the unit obtained by dividing by 32 pixels in the horizontal direction × 32 pixels in the vertical direction. When disparity is to be produced in the vertical direction, the relationship of pixel interval between the horizontal direction and the vertical direction is reversed.

The artifact extraction process (step S4) shown in Fig. 17 is performed prior to the corresponding point search process and the distance image generation process (step S1A).

### (f2: Artifact Extraction Process)

First, the details of the artifact extraction process (step S4) shown in Fig. 17 will be described. In the artifact extraction process, an area in which an "artifact" is present is extracted as a feature area. An "artifact" is determined by extracting a characteristic shape in the input image. More specifically, an "artifact" is extracted based on one or a plurality of feature amounts of a straight line, a quadric curve, a circle, an ellipse, and a texture (textured repeated pattern). A variety of methods can be employed as the method of extracting an "artifact" based on such feature amounts.

As a typical example, a process of extracting an area including a straight line and an arc (partial circle) as an artifact area from input image 1 will be described below.

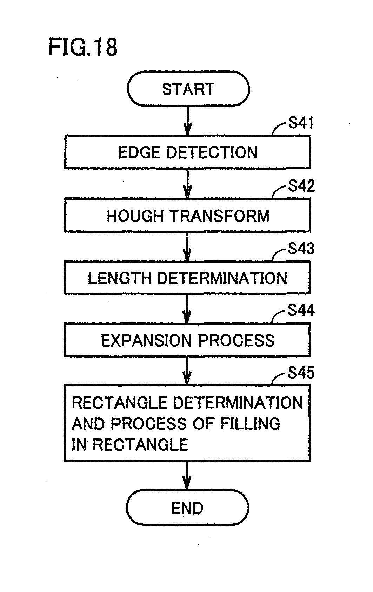

Fig. 18 is a flowchart showing a process procedure of the artifact extraction process shown in Fig. 17. Each step shown in Fig. 18 is performed by area determination unit 34 shown in Fig. 1.

Referring to Fig. 18, first, area determination unit 34 detects an outline (edge) included in input image 1 (step S41). A variety of methods can be employed as an algorithm for this edge detection. For example, area determination unit 34 performs image processing using the Canny algorithm to extract an edge present in input image 1. This Canny algorithm is known and therefore not described in details. As another edge detection method, for example, image processing using a differential filter such as Sobel filter may be employed.

When edges included in input image 1 are detected, area determination unit 34 detects a graphical primitive that constitutes each of the edges (step S42). As described above, "graphical primitives" are graphics, such as a straight line, a quadric curve, a circle (or arc), and an ellipse (or elliptical arc), having a shape and/or size that can be specified in a coordinate system by giving a specific numerical value as a parameter to a predetermined function. More specifically, area determination unit 34 specifies a graphical primitive by performing Hough transform on each of the detected edges.

When a graphical primitive that constitutes each of the edges is detected, area determination unit 34 determines that one of the detected graphical primitives that has a length equal to or longer than a predetermined value is an "artifact". Specifically, area determination unit 34 measures the length (the number of connected pixels) of each of the detected graphical primitives and specifies the one that has the measured length equal to or greater than a predetermined threshold value (for example, 300 pixels) as a graphical primitive (step S43). Area determination unit 34 then thickens the line of the specified graphical primitive by performing an expansion process on the graphical primitive (step S44). This thickening is a pre-process for enhancing the determination accuracy in the subsequent determination process.

Area determination unit 34 then specifies an artifact area based on the thickened graphical primitive (step S44). More specifically, area determination unit 34 calculates the ratio of the length of the graphical primitive that constitutes an edge to the length of the edge and extracts an edge whose ratio of length as calculated satisfies a predetermined condition (for example, 75% or more), from among the detected edges. Area determination unit 34 then specifies the inside of the edge that satisfies a predetermined condition as an artifact area. A quadric curve or an ellipse may be extracted by setting this predetermined condition appropriately.

That is, area determination unit 34 employs the proportion of the length of one or more kinds of predetermined graphical primitives that constitute an edge, to the length of the edge in input image 1, as a determination condition for determining an artifact area (a geometrical condition for the input image).

An artifact area included in input image 1 is extracted through a series of processing as described above.

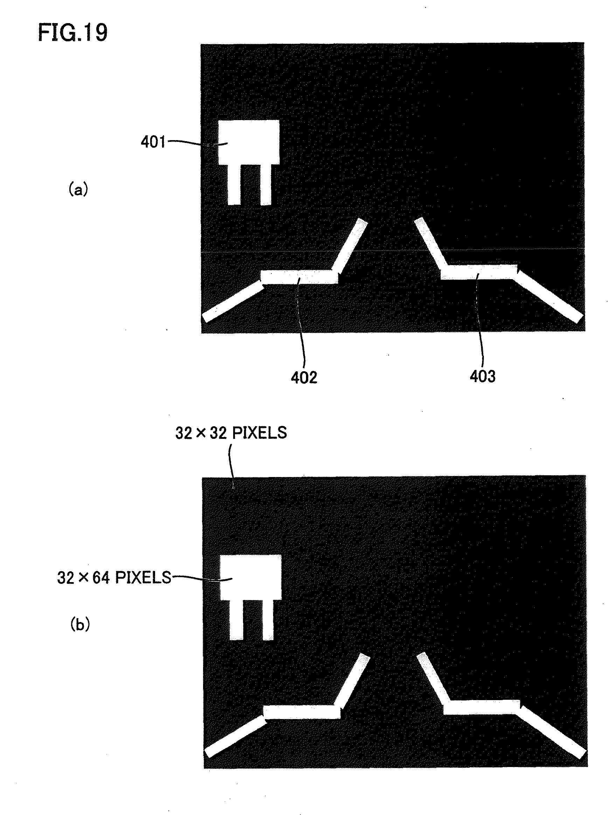

Fig. 19 is a diagram showing an example of a result of the artifact extraction process in the image processing method according to the second embodiment of the present invention. In the processing result shown in Fig. 19, only the extracted artifact area is shown for the sake of convenience of explanation. In Fig. 19, a "white" area shows an area that is determined as an artifact area, and a "black" area shows an area that is not determined as an artifact area.

The processing result shown in Fig. 19 corresponds to input image 1 in Fig. 6(a), wherein artifact areas 401, 402, 403 are extracted. Artifact area 401 is an area corresponding to the "signboard" located on the left side of input image 1, and artifact areas 402 and 403 are areas corresponding to the outer periphery of the sidewalk in input image 1.

As described later, for the area (the "white" area) extracted as an artifact area, a distance is calculated with a unit area of 32 pixels × 64 pixels, and for the other area (the "black" area), a distance is calculated with a unit area of 32 pixels × 32 pixels.

A method below may be employed in place of the method of extracting an artifact area as described above.

For example, feature point information such as a bend point is extracted from point row information of a line that constitutes an edge included in the input image, and closed graphics such as a triangle and a square that is constituted with at least three graphical primitives is detected based on the feature point information. A rectangular area that contains the detected closed graphics at a proportion equal to or greater than a predetermined reference value may be specified, and the specified rectangular area or the like may be extracted as an artifact area. As such a process of extracting an artifact area, techniques disclosed in, for example, Japanese Laid-Open Patent Publication Nos. 2000-353242 and 2004-151815 may be employed.

Alternatively, an artifact area may be extracted based on "complexity" included in the input image. In general, an artifact area has a lower degree of "complexity" in the image than an area corresponding to a natural object that is not an artifact. Then, an index value indicating "complexity" in the image may be calculated, and an artifact area may be extracted based on the calculated index value. Specifically, complexity of an image in input image 1 is employed as a determination condition for determining an artifact area (a geometrical condition for the input image). As an example of the index value indicating "complexity" of an image, a fractal dimension that is a scale representing autocorrelation of graphics may be employed. In general, a fractal dimension has a larger value as the complexity of an image increases. Therefore, the "complexity" of an image can be evaluated based on the magnitude of the fractal dimension.

As such a process of extracting an artifact area, a natural objet area may be extracted from the fractal dimension as disclosed in Japanese Laid-Open Patent Publication No. 06-343140, and an area other than the extracted natural object area may be extracted as an artifact area.

(f3: Corresponding Point Search Process and Distance Image Generation Process)

Next, the details of the corresponding point search process and the distance image generation process (step S 1 A) shown in Fig. 17 will be described. In the corresponding point search process and the distance image generation process, a unit area having a pixel size varied between the vertical direction and the horizontal direction (for example, 32 pixels in the horizontal direction × 64 pixels in the vertical direction) is set for the artifact area extracted in the artifact extraction process in step S4, and a normal unit area (for example, 32 pixels in the horizontal direction × 32 pixels in the vertical direction) is set for the other area. The corresponding point search process and the distance image generation process are performed in accordance with the set unit areas.

Specifically, for the area (the "white" area) determined as an artifact area in the processing result shown in Fig. 19(b), a distance is calculated with the unit area of 32 pixels in the horizontal direction × 64 pixels in the vertical direction, and for the area not determined as an artifact area (the "black" area), a distance (distance image) is calculated with the unit area of 32 pixels in the horizontal direction × 32 pixels in the vertical direction.

The other processes are the same as in the first embodiment, and a detailed description is therefore not repeated.

### (f4: Advantages)

With the image processing method according to the present embodiment, a distance image generally equalized in the vertical direction is generated only for the area in which a distortion produced in the generated stereo image is expected to be conspicuous, whereas the accuracy of generating a distance image can be kept for the other area. Accordingly, crisp stereoscopic display can be implemented while suppressing image distortion.

### <G. Third Embodiment>

### (g1: Overview)

In the present embodiment, in order to suppress a conspicuous distortion produced in a stereo image, for a "near and far conflict area" which is the area of a subject where distance variations are relatively great, the corresponding point search process and the distance image generation process are performed for each unit area having a pixel size varied between the vertical direction and the horizontal direction as described above. Specifically, for the "near and far conflict area", a distance image is generated with a unit area having a pixel size different between the vertical direction and the horizontal direction, and for an area that is not the "near and far conflict area", a distance image is generated with a normal unit area. Accordingly, for the "near and far conflict area" where a distortion is conspicuous, a distance (disparity) is calculated such that a distortion is less likely to be produced, and for the other area, the accuracy of calculating a distance (disparity) is enhanced. By using a stereo image generated by such a method, crisp stereoscopic display can be performed while suppressing image distortion.

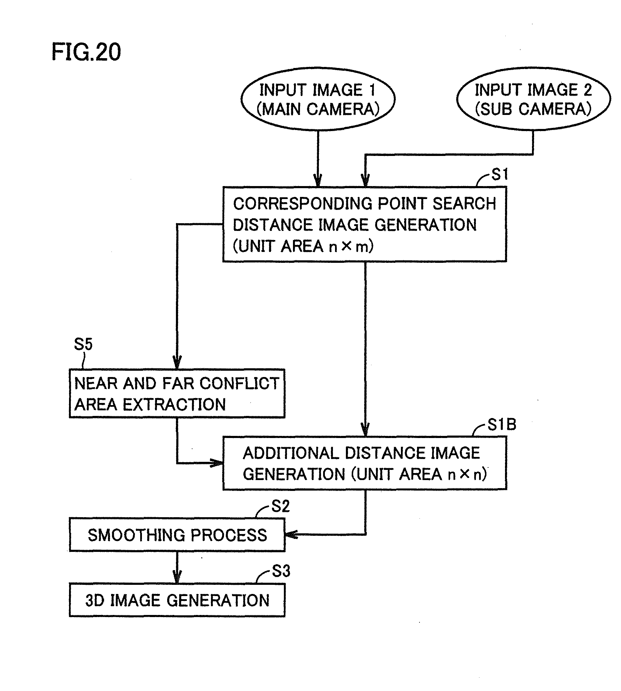

Fig. 20 is a block diagram schematically showing a procedure of the image processing method according to a third embodiment of the present invention. The schematic block diagram shown in Fig. 20 differs from the schematic block diagram shown in Fig. 13 in that a near and far conflict extraction process (step S5) and an additional distance image generation process (step S1B) are added. The other processes are the same as the corresponding processes in Fig. 13, and a detailed description is therefore not repeated.

In the image processing method according to the present embodiment, a distance is acquired for each unit area coarse in the vertical direction, only for the near and far conflict area, and a distance is acquired for each normal unit area, for the other area.

More specifically, in the corresponding point search process and the distance image generation process shown in step S1 in Fig. 20, first, a distance is acquired with a unit area having a pixel size different between the vertical direction and the horizontal direction (for example, 32 pixels in the horizontal direction × 64 pixels in the vertical direction). Meanwhile, a near and far conflict area is extracted in the near and far conflict extraction process shown in step S5, and for the area other than the extracted near and far conflict area, a distance is acquired with a unit area having the same pixel size in the vertical direction and the horizontal direction (for example, 32 pixels in the horizontal direction × 32 pixels in the vertical direction) (step S1B). Since the distance has already been acquired in step S1, in step S1B, only a distance of a part that is lacking is additionally acquired.

By employing such processing, crisp stereoscopic display can be performed while reducing the entire processing volume and suppressing image distortion.

A near and far conflict area may be extracted in advance in the same manner as in the foregoing second embodiment. A required distance is then calculated by setting a unit area having a pixel size varied between the vertical direction and the horizontal direction for the area extracted as a near and far conflict area and by setting a normal unit area for the area other than the near and far conflict area.

### (g2: Near and Far Conflict Area Extraction Process)

First, the details of the near and far conflict area extraction process (step S5) shown in Fig. 20 will be described. In the near and far conflict area extraction process, a near and far conflict area is determined based on a distribution state of distances from imaging unit 2 for the pixels in the area of interest. Specifically, if the distribution of distances from imaging unit 2 is relatively wide and discrete, it is determined as being a near and far conflict area.

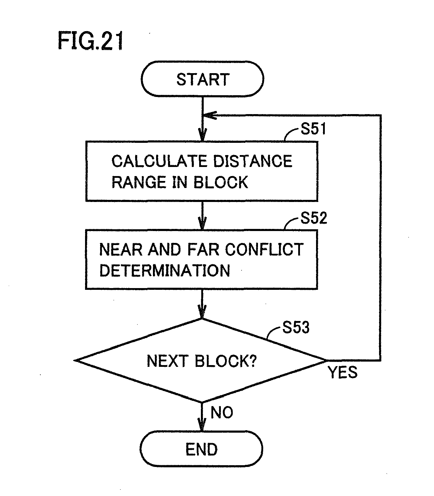

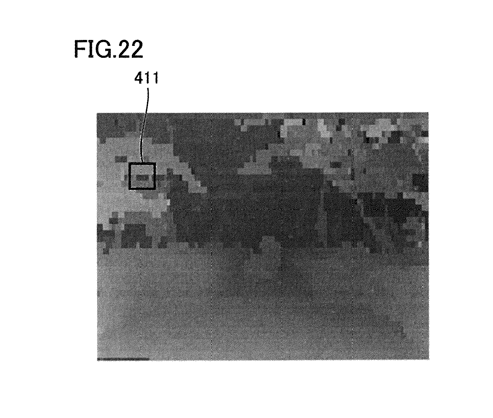

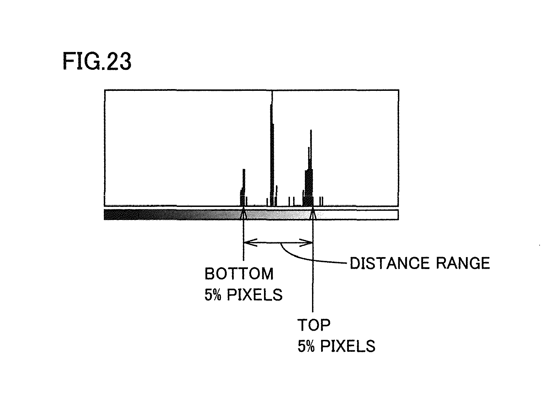

Fig. 21 is a flowchart showing a process procedure of a near and far conflict area extraction process shown in Fig. 20. Each step shown in Fig. 21 is performed by area determination unit 34 shown in Fig. 1. Fig. 22 is a diagram showing an example of a block set in the process procedure of the near and far conflict area extraction process shown in Fig. 21. Fig. 23 is a diagram showing an example of a histogram of distances of pixels included in a block 411 shown in Fig. 22.

Upon start of the near and far conflict area extraction process, area determination unit 34 sets one or more blocks for a distance image acquired by performing the corresponding point search process and the distance image generation process (step S1). As shown in Fig. 22, the set block 411 is typically a rectangular area and has a predetermined pixel size (for example, 320 pixels × 320 pixels). The number of pixels included in this block is preferably such a number that enables valid statistical processing.

When blocks are set for the distance image, area determination unit 34 selects one of the set blocks and performs statistical processing on the distance information included in the selected block. The area determination unit 34 then acquires a statistical distribution state of the distance information in the selected block. More specifically, a histogram as shown in Fig. 23 is calculated. This histogram is an example of the statistical distribution state of the distance information in the set block 411 in Fig. 22. In the histogram shown in Fig. 23, the horizontal axis indicates intervals of distances (disparity) divided according to a predetermined width, and the vertical axis indicates the degree (number) of pixels belonging to the distance (disparity) corresponding to each interval.

Block 411 shown in Fig. 22 corresponds to the area where the "signboard" is present in input image 1 shown in Fig. 5 and includes "bush" located closer to imaging unit 2 than the "signboard" and "trees" located farther from imaging unit 2 than the "signboard" as a subject. The distribution of distance information of pixels included in block 411 is expressed as a histogram with disparity (distance information) as a variable as shown in Fig. 23, in which the peaks of the degree distribution appear discretely (discontinuous) and the distribution width of disparity is relatively wide.

Specifically, in the histogram with disparity (distance information) as a variable, when the peaks of degree distribution appear discretely (discontinuously) and the distribution range of disparity is relatively wide, variations in distance from imaging unit 2 are relatively great as is the case with block 411 in Fig. 22. It follows that a subject at short distance that is relatively close to imaging unit 2 and a subject at long distance that is relatively far from imaging unit 2 are mixed. In such a state, it is determined that target block 411 is set as a "near and far conflict area".

In the present embodiment, as an index value for determining such a "near and far conflict area", the "distance range" of the histogram is employed. This "distance range" means a range indicating the spread of the histogram. More specifically, the "distance range" means the difference (distribution range) between the disparity (distance information) corresponding to the pixels that fall within the top 5% when all the pixels included in block 411 are counted in order of decreasing values of disparity and the disparity (distance information) corresponding to the pixels that fall within the bottom 5% when being counted in order of increasing values of disparity. The range from the top 5% to the bottom 5% is set as a distance range in order to remove the pixel (noise-like component) in which the acquired disparity (distance information) greatly differs from the original value due to an error in corresponding point search in the corresponding point search process.

In this manner, first, area determination unit 34 calculates a distance range in the selected block (step S51 in Fig. 21). Area determination unit 34 then determines whether block 411 set at present is a near and far conflict area, based on the distance range calculated in step S51 (step S52). That is, area determination unit 34 determines whether the statistical distribution state of the distance information in the selected block 411 satisfies a predetermined condition that defines a near and far conflict area. More specifically, area determination unit 34 determines whether the distance range calculated in step S51 exceeds a predetermined threshold value (for example, "20").

Area determination unit 34 stores the determination result as to whether or not the block 411 set at present is a near and far conflict area, and determines whether there exists an area having a block not yet set in the distance image (step S53). If there exists an area having a block not yet set (NO in step S53), the next block is set, and the processing in steps S51 and S52 is repeated.

If blocks are set in the distance image as a whole and finished being processed (YES in step S53), area determination unit 34 outputs identification information indicating a near and far conflict area or not in association with a coordinate on the image coordinate system of the distance image. The process then ends.

In the present embodiment, a "distance range" is employed as an index value indicating a statistical distribution state. However, another index may be employed. For example, a standard deviation of the distance information included in a block set in the distance image may be employed as an index value indicating a statistical distribution state.

A near and far conflict area included in input image 1 is extracted through a series of processing as described above.

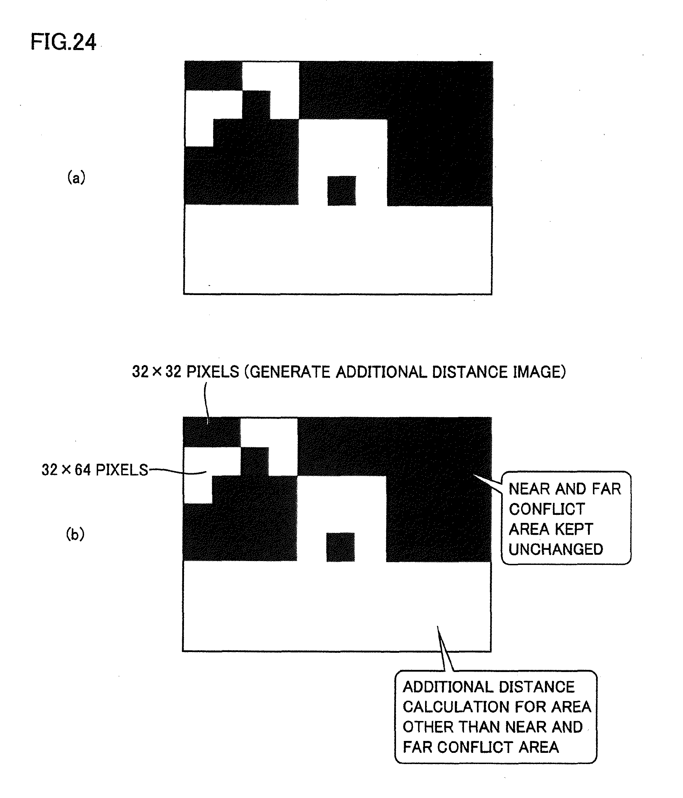

Fig. 24 is a diagram showing an example of a result of the near and far conflict area extraction process in the image processing method according to the third embodiment of the present invention. In the processing result shown in Fig. 24, only the extracted near and far conflict area is shown for the sake of convenience of explanation. In Fig. 24, the "white" area shows an area determined as a near and far conflict area, and the "black" area indicates an area not determined as a near and far conflict area.

The processing result shown in Fig. 24(a) corresponds to input image 1 in Fig. 6(a), wherein the area where the "signboard" and "trees" are present is extracted as a near and far conflict area.

As described later, for the area (the "black" area) extracted as a near and far conflict area, a distance is calculated with a unit area of 32 pixels × 64 pixels, and for the other area (the "white" area), a distance is calculated with a unit area of 32 pixels × 32 pixels.

### (g3: Corresponding Point Search Process and Distance Image Generation Process)

Next, the details of the additional distance image generation process (step S1B) shown in Fig. 20 will be described. In the additional distance image generation process, the distance image generation process is additionally performed on the area other than the near and far conflict area extracted in the near and far conflict area extraction process in step S5.

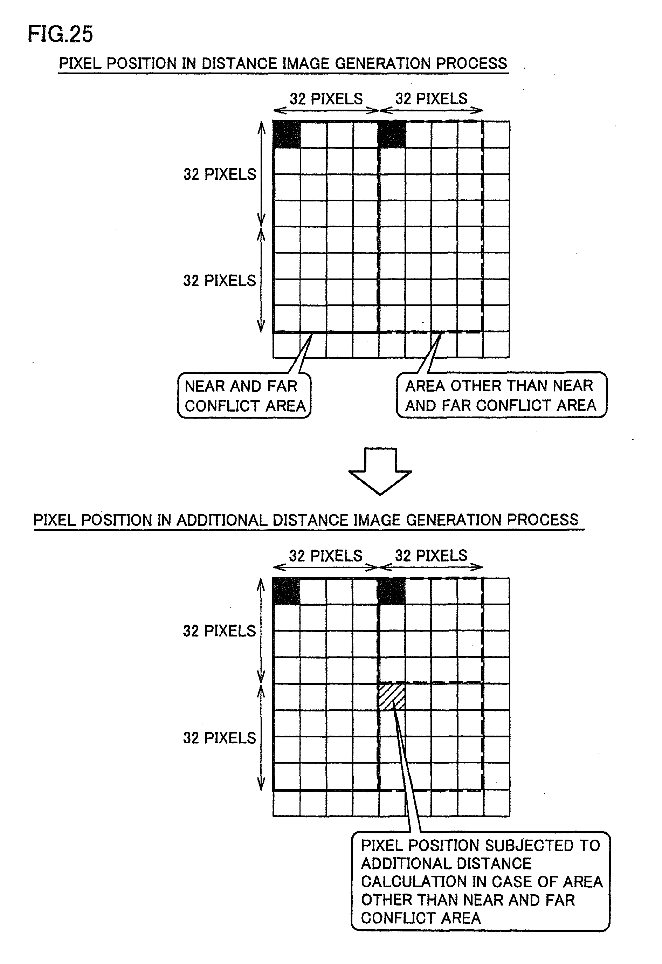

Fig. 25 is a diagram for explaining the process contents in the corresponding point search process and the distance image generation process (step S1) and the additional distance image generation process (step S1B) shown in Fig. 20.

Referring to Fig. 25, first, in step S1, a distance is calculated with a unit area of 32 pixels × 64 pixels for the near and far conflict area and the other area as a whole. At this point of time, no near and far conflict area has been specified because the corresponding point search process and the distance image generation process (step S1) are performed prior to the near and far conflict area extraction process (step S5).

Subsequently, when a near and far conflict area is extracted, in the additional distance image generation process (step S1B), the additional distance calculation process is performed on the area other than the near and far conflict area. In the present embodiment, the unit area with which a distance is calculated for the near and far conflict area has a pixel size of 32 pixels × 64 pixels, which is twice the pixel size of the normal unit area. For the area other than the near and far conflict area, a distance is calculated additionally one by one for each unit area (32 pixels × 64 pixels) in which a distance has already been calculated.

Of the results of the near and far conflict area extraction shown in Fig. 24(a) as described above, for the area (the "white area") other than the near and far conflict area, an additional distance calculation process is performed in order to calculate a distance with the unit area of 32 pixels × 32 pixels.

The other processes are the same as in the first embodiment, and a detailed description is therefore not repeated.

### (g4: Advantages)

In the image processing method according to the present embodiment, a distance image generally equalized in the vertical direction is generated only for the area where a distortion produced in the generated stereo image is expected to be conspicuous, whereas the accuracy of generating a distance image can be kept for the other area. Accordingly, crisp stereoscopic display can be implemented while suppressing image distortion.

### <H. Fourth Embodiment>

In the example shown in the second embodiment, an "artifact area" is extracted, and, for the extracted "artifact area", a distance is calculated with a unit area having a pixel size different between the vertical direction and the horizontal direction. In the example shown in the third embodiment, a "near and far conflict area" is extracted, and for the extracted "near and far conflict area", a distance is calculated with a unit area having a pixel size different between the vertical direction and the horizontal direction.

These "artifact area" and "near and far conflict area" are extracted with respective different algorithms, and the processing may be performed by appropriately combining these extracted areas.

More specifically, only for the area that is an "artifact area" and a "near and far conflict area", a distance may be calculated with a unit area having a pixel size different between the vertical direction and the horizontal direction. By employing such an "AND" condition for the areas, a stereo image can be generated with a stereoscopic view kept as much as possible.

On the other hand, for the area that is at least one of an "artifact area" and a "near and far conflict area", a distance may be calculated with a unit area having a pixel size different between the vertical direction and the horizontal direction. By employing such an "OR condition" for the areas, a stereo image can be generated while suppressing image distortion as much as possible.

For the area that is an "artifact area" and a "near and far conflict area", a distance may be calculated with a unit obtained by dividing by 32 pixels in the horizontal direction × 64 pixels in the vertical direction, for the area that is determined to be only one of an "artifact area" and a "near and far conflict area", a distance may be calculated with a unit obtained by dividing by 32 pixels in the horizontal direction × 48 pixels in the vertical direction, and for the area determined to be neither an "artifact area" nor a "near and far conflict area", a distance may be calculated with a unit obtained by dividing by 32 pixels in the horizontal direction × 32 pixels in the vertical direction.

As described above, a distance may be calculated with finer precision in accordance with the attribute of an area. Accordingly, crisp stereoscopic display can be implemented more reliably while suppressing image distortion.

### <I. Other Modifications>

In all of the foregoing first to fourth embodiments, the smoothing process (step S2) can be modified as follows. That is, the smoothing process may be performed on a distance image, in accordance with the directivity of the pixel size of a unit area.

### (i1: First Modification to Smoothing Process)

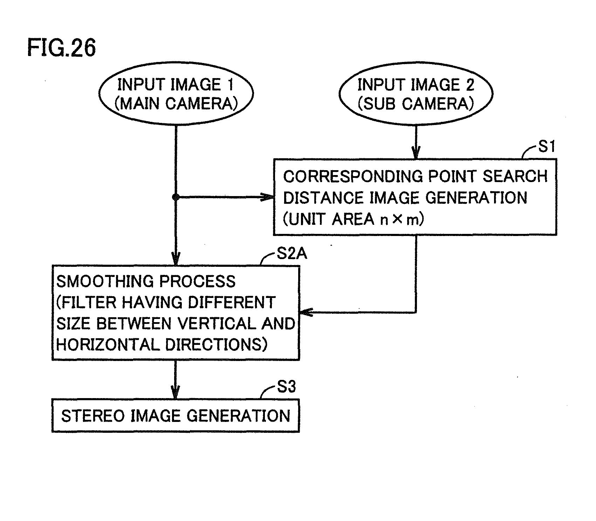

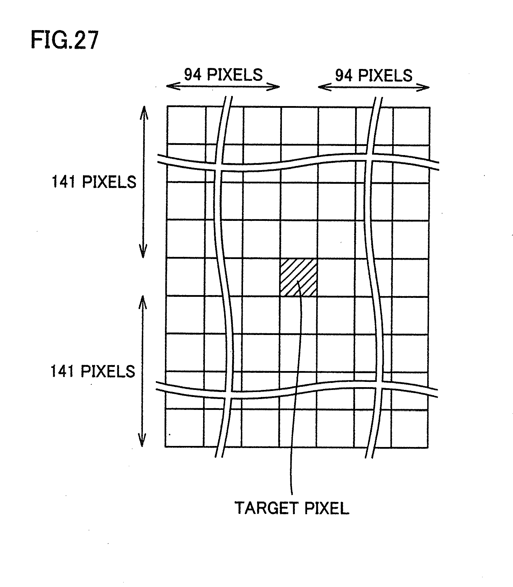

Fig. 26 is a block diagram schematically showing a procedure of the image processing method according to a first modification of the embodiment of the present invention. Fig. 27 is a diagram showing an example of an averaging filter used in the smoothing process (step S2) shown in Fig. 26.

Fig. 26 shows an example in which the filtering process in the image processing method according to the first embodiment shown in Fig. 13 is modified as a typical example, which is also applicable similarly to the other embodiments.

In the filtering process on a distance image in the smoothing process (step S2) in Fig. 26, an averaging filter having a pixel size different between the vertical direction and the horizontal direction as shown in Fig. 27 may be used. The averaging filter shown in Fig. 27 is set at a pixel size associated with a unit area for the distance image generation. Such an averaging filter having a pixel size associated with a unit area can be used to finely control the level of generally equalizing the vertical direction and the horizontal direction in the distance image. Accordingly, imaging in stereoscopic display can be optimized more.

### (i2: Second Modification to Smoothing Process)

The smoothing process in the present embodiment may be implemented in two steps.

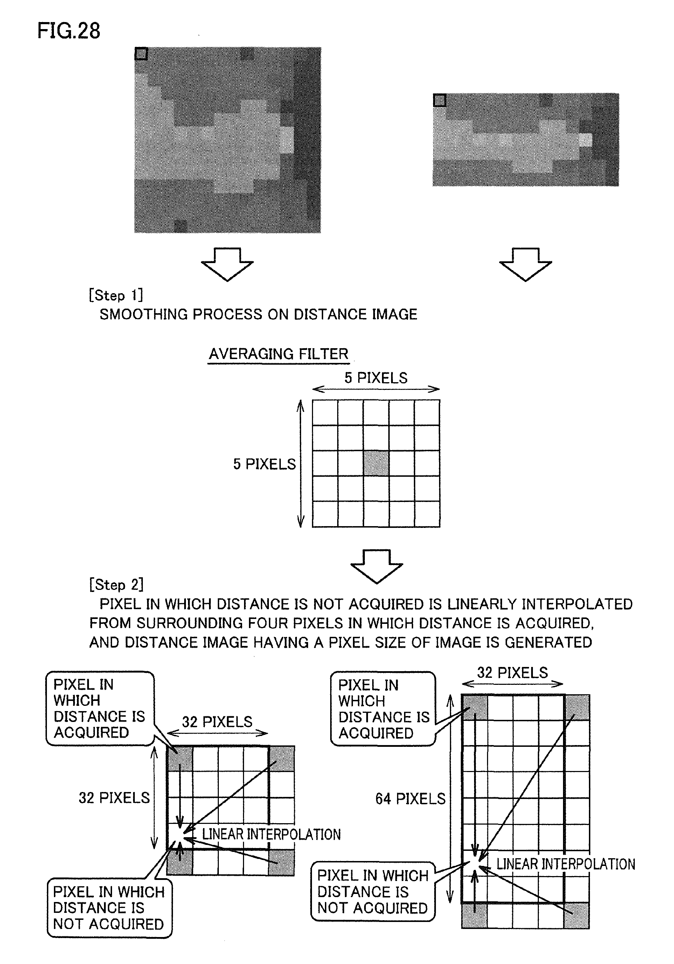

Fig. 28 is a diagram for explaining the smoothing process according to a second modification of the embodiment of the present invention. As shown in Fig. 28, in the first step (Step 1), the averaging filter is applied to a distance image (an image only formed with pixels in which a distance is acquired) to generate the smoothed distance information. The distance image (original distance image) to be subjected to the averaging filter in the first step has a pixel size of 108 pixels × 81 pixels, where the size of an input image is 3456 pixels × 2592 pixels, and the size of the unit area subjected to corresponding point search is 32 pixels × 32 pixels.

In the next second step (Step 2), in order to generate a distance image having a pixel size corresponding to input image 1, each pixel value is calculated by performing linear interpolation on a pixel in which a distance is not acquired, in accordance with the pixel values of the surrounding pixels and the distance to the pixels.

Here, in Step 1, irrespective of the pixel size of a unit area in which a distance is calculated, the averaging filter of a fixed pixel size (for example, 5 pixels × 5 pixels) is used. By contrast, in Step 2, a distance image in accordance with the pixel size of the input image is generated by performing linear interpolation with the size corresponding to the pixel size of a unit area in which a distance is calculated.

In Step 1 shown in Fig. 28, image distortion can be suppressed in the same manner as in the image processing method according to the present embodiment by applying a smoothing process more intensively in the vertical direction or the horizontal direction by changing the size of the averaging filter. More specifically, in Step 1 shown in Fig. 28, the averaging filter of 5 pixels × 9 pixels can be used to generate a distance image in which image distortion in the vertical direction is suppressed, in the same manner as in the image processing method according to the present embodiment. However, this method requires more processing volume due to the use of a larger averaging filter than the image processing method according to the present embodiment.

By contrast, according to the image processing method in the present embodiment, the image size of a unit area in which a distance (disparity) is calculated is varied between the vertical direction and the horizontal direction, thereby reducing the number of pixels of the distance image initially generated (the pixel size processed in Step S1). Therefore, the pixel size of the averaging filter can be reduced, resulting in the effects of accelerating the processing and reducing the hardware scale.

### <J. Advantages>

According to embodiments of the present invention, a distance image is generated which is generally equalized in the direction in which a distortion produced in the generated stereo image is expected to be conspicuous. Accordingly, crisp stereoscopic image can be realized while suppressing image distortion.

The embodiment disclosed here should be understood as being illustrative rather than being limitative in all respects. The scope of the present invention is shown not in the foregoing description but in the claims, and it is intended that all modifications that come within the meaning and range of equivalence to the claims are embraced here.

### REFERENCE SIGNS LIST

1 image processing system, 2 imaging unit, 3 image processing unit, 4 image output unit, 21 first camera, 21a, 22a lens, 21 b, 22b image pickup device, 22 second camera, 23, 24 A/D conversion unit, 30 corresponding point search unit, 32 distance image generation unit, 34 area determination unit, 36 smoothing processing unit, 38 image generation unit, 100 digital camera, 102 CPU, 104 digital processing circuit, 106 image processing circuit, 108 image display unit, 112 storage unit, 114 zoom mechanism, 121 main camera, 122 sub camera, 200 personal computer, 202 personal computer body, 204 image processing program, 206 monitor, 208 mouse, 210 keyboard, 212 external storage device.

## Claims

1. An image processing system comprising:
first imaging means for capturing an image of a subject to acquire a first input image;
second imaging means for capturing an image of said subject from a point of view different from said first imaging means to acquire a second input image; and
distance information acquisition means for acquiring distance information indicating a distance relative to a predetermined position, for each of unit areas having a predetermined pixel size, between said first input image and said second input image, wherein
said unit areas are defined by a first pixel interval corresponding to a first direction in said first input image and a second pixel interval different from said first pixel interval, corresponding to a second direction.

2. The image processing system according to claim 1, further comprising stereoscopic view generation means for generating a stereo image for stereoscopically displaying said subject by shifting pixels included in said first input image in said first direction, based on said distance information, wherein
said first pixel interval that defines said unit areas is set shorter than said second pixel interval.

3. The image processing system according to claim 2, further comprising smoothing processing means for performing a smoothing process in accordance with a directivity of a pixel size of said unit area, on a distance image indicating said distance information.

4. The image processing system according to any one of claims 1 to 3, further comprising area determination means for determining a feature area included in said subject, wherein
said distance information acquisition means changes a pixel size for a unit area that includes the extracted feature area.

5. The image processing system according to claim 4, wherein said feature area includes any of a straight line, a quadric curve, a circle, an ellipse, and a texture.

6. The image processing system according to claim 4, wherein said feature area includes a near and far conflict area that is an area in which variations in distance are relatively great.

7. The image processing system according to any one of claims 1 to 3,
wherein said distance information acquisition means acquires said distance information based on a correspondence for each point of said subject between said first input image and said second input image.

8. An image processing method comprising the steps of:
capturing an image of a subject to acquire a first input image;
capturing an image of said subject from a point of view different from a point of view from which said first input image is captured, to acquire a second input image; and
acquiring distance information indicating a distance relative to a predetermined position, for each of unit areas having a predetermined pixel size, between said first input image and said second input image, wherein
said unit areas are defined by a first pixel interval corresponding to a first direction in said first input image and a second pixel interval different from said first pixel interval, corresponding to a second direction.

9. An image processing program that allows a computer to execute image processing, said image processing program causing said computer to perform the steps of:
capturing an image of a subject to acquire a first input image;
capturing an image of said subject from a point of view different from a point of view from which said first input image is captured, to acquire a second input image; and
acquiring distance information indicating a distance relative to a predetermined position, for each of unit areas having a predetermined pixel size, between said first input image and said second input image, wherein
said unit areas are defined by a first pixel interval corresponding to a first direction in said first input image and a second pixel interval different from said first pixel interval, corresponding to a second direction.
